Europäisches Patentamt

European Patent Office

Office européen des brevets

(11) Veröffentlichungsnummer: **0 350 603**

**A2**

## (12) EUROPÄISCHE PATENTANMELDUNG

(21) Anmeldenummer: 89109315.5

(22) Anmeldetag: 24.05.89

(51) Int. Cl.⁴: **G02B 23/24 , G01N 21/88**

(30) Priorität: 12.07.88 DE 3823554

(43) Veröffentlichungstag der Anmeldung:
17.01.90 Patentblatt 90/03

(84) Benannte Vertragsstaaten:
BE DE FR GB IT

(71) Anmelder: **Richard Wolf GmbH**
**Pforzheimer Strasse 32**
**D-7134 Knittlingen(DE)**

(72) Erfinder: **Diener, Jörg**
**Bremichstrasse 20**
**D-7519 Oberderdingen(DE)**

(74) Vertreter: **Wilcken, Thomas, Dipl.-Ing. et al**
**Musterbahn 1**
**D-2400 Lübeck(DE)**

(54) **Technoskop mit einem Aufsatz zur Risstiefenmessung.**

(57) Es ist ein Technoskop (1) beschrieben, das neben der Ermittlung der Längen- bzw. Flächenausdehnung von Oberflächenbeschädigungen in Hohlräumen technischer Bauteile auch zur Bestimmung der Tiefe derartiger Beschädigungen geeignet ist. Diese letztere Messung erfolgt durch einen Meßaufsatz (18) mit einer mit zwei Elektroden (31) ausgestatteten Meßsonde (28), die unter Abstützen gegenüber einem Abstützelement (30) auf der inneren Oberfläche des Hohlraumes die Schadensstelle übergreifend aufgesetzt werden. Als Maß für die Rißtiefe wird die durch einen Oberflächenriß verursachte Störung der zwischen den beiden Elektroden der Meßsonde verlaufenden, sich kissenförmig ausbreitenden Stromlinien und der daraus resultierenden Potentialdifferenz herangezogen. Die entsprechende Auswertung erfolgt durch ein Rißtiefenmeßgerät, welches nach dem Gleichstrom-Patentialsondenverfahren arbeitet.

FIG. 1

## Technoskop mit einem Aufsatz zur Rißtiefenmessung

Die Erfindung betrifft ein Technoskop zum Überprüfen technischer Oberflächen, insbesondere solcher von Hohlräumen in technischen Bauteilen, zwecks Feststellung eventueller Beschädigungen unter Bestimmung der Schadensausdehnung, mit einem Schaft zur Aufnahme eines optischen Systems zur visuellen Kontrolle der Hohlräume, welches proximalseitig mit einem fokussierbaren Okular versehen ist, eines Beleuchtungssystems zur Ausleuchtung der zu überprüfenden Oberfläche und eines Versorgungskanals zur Einführung von Hilfsinstrumenten oder Hilfsmitteln.

Nach der technischen Überprüfung von Industrieanlagen, Triebwerken und dergleichen ist es erforderlich, zusätzliche Sichtkontrollen vorzunehmen, um beispielsweise aus Oberflächenbeschädigungen resultierenden Funktionseinschränkungen oder gar vollständigen Ausfällen bzw. Zerstörungen wirksam vorzubeugen. Hierbei ist es übliche Praxis, die dem Stand der Technik entsprechenden Technoskope mit TV- oder Videokameras einzusetzen, um mittels diesen gezielte visuelle Inspektionen vornehmen zu können. Zur Dokumentation von festgestellten Beschädigungen bzw. Veränderungen, die beispielsweise auf Materialermüdungen zurückgehen, ist es gleichfalls üblich, Fotokameras einzusetzen. Einer solchen Überprüfung kommt große Bedeutung zu, da auch geringste Beschädigungen der Oberfläche zu einem vollständigen Funktionsausfall bzw. zu einer vollständigen Zerstörung führen können. Es ist deshalb erforderlich, das Ausmaß derartiger Beschädigungen zu ermitteln.

Das kann beispielsweise durch Anwendung des Verfahrens nach der deutschen Patentanmeldung 35 12 602 erfolgen, welches ermöglicht, bei Feststellung eines Risses oder einer Beschädigung die Schadensausdehnung direkt oder indirekt mittels eines im Okular angeordneten Meßrasters oder dergleichen auszumessen. Zur Beurteilung beispielsweise solcher Haarrisse können nach dem allgemeinen Stand der Technik UV-Licht-reflektierende Substanzen wie Magnetpulver oder auch spezielle Flüssigkeiten verwendet werden, die eine visuelle Ermittlung der Längen- bzw. Flächenausdehnung der Beschädigung ermöglichen.

Eine vollständige Schadensbeurteilung, beispielsweise im Umfang einer gutachtlichen Stellungnahme, ist jedoch nur dann durchführbar, wenn zusätzlich zur ermittelten flächigen Schadensausdehnung auch deren Tiefe exakt ermittelt wird. Eine sachlich fundierte Aussage über den vollständigen Schadensumfang kann mit den Mitteln des Standes der Technik nicht abgegeben werden.

Der Erfindung liegt daher die Aufgabe zugrunde, ergänzend zur Feststellung und Ausmessung der flächenmäßigen Beschädigung auch die Tiefe derselben exakt ermitteln zu können.

Diese Aufgabe wird erfindungsgemäß durch ein Technoskop der eingangs genannten Art gelöst, welches dadurch gekennzeichnet ist, daß das distale Ende des Schaftes mit einem lösbar und drehstabil befestigbaren Meßaufsatz zur Ermittlung der Tiefe einer Beschädigung versehen ist.

Gemäß einer bevorzugten Ausführung der Erfindung kann der Meßaufsatz eine Meßsonde und ein Abstützelement aufweisen, welche unter radialer Ausrichtung auf ineinander entgegengesetzten Richtungen durch pneumatische Betätigung verschiebbaren Schubelementen befestigt sind. Dabei kann vorzugsweise die Verschiebung der Schubelemente durch einen pneumatischen Kurzhubzylinder erfolgen, der die Schubelemente bei Druckbeaufschlagung gegen Federkraft auseinanderdrängt. Zwecks exakter Führung und Abstützung des Technoskops in dem zu prüfenden Hohlraum kann das distale Ende des Schaftes mit einem Abstützelement versehen sein. Die Auswertung der Tiefenmessung kann mit einem nach dem Gleichstrom-Potentialsondenverfahren arbeitenden Rißtiefenmeßgerät vorgenommen werden.

Ein erfindungsgemäß ausgestattetes Technoskop wird nachfolgend anhand der Zeichnung näher erläutert. Es zeigen:

Figur 1 eine Seitenansicht des Technoskops in teilweiser Schnittdarstellung,

Figur 2 das Technoskop gemäß Figur 1 in um 90° versetzter Seitenansicht,

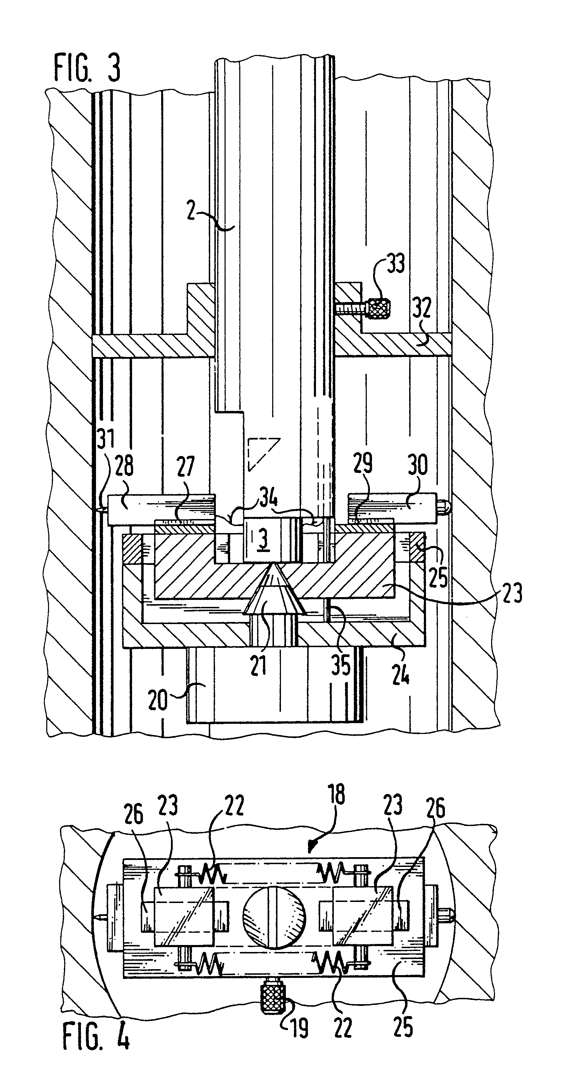

Figur 3 eine Schnittdarstellung des Meßaufsatzes an dem Schaftende des Technoskops während der Überprüfung eines Hohlraumes,

Figur 4 eine Stirnansicht des Meßaufsatzes gemäß Figur 3.

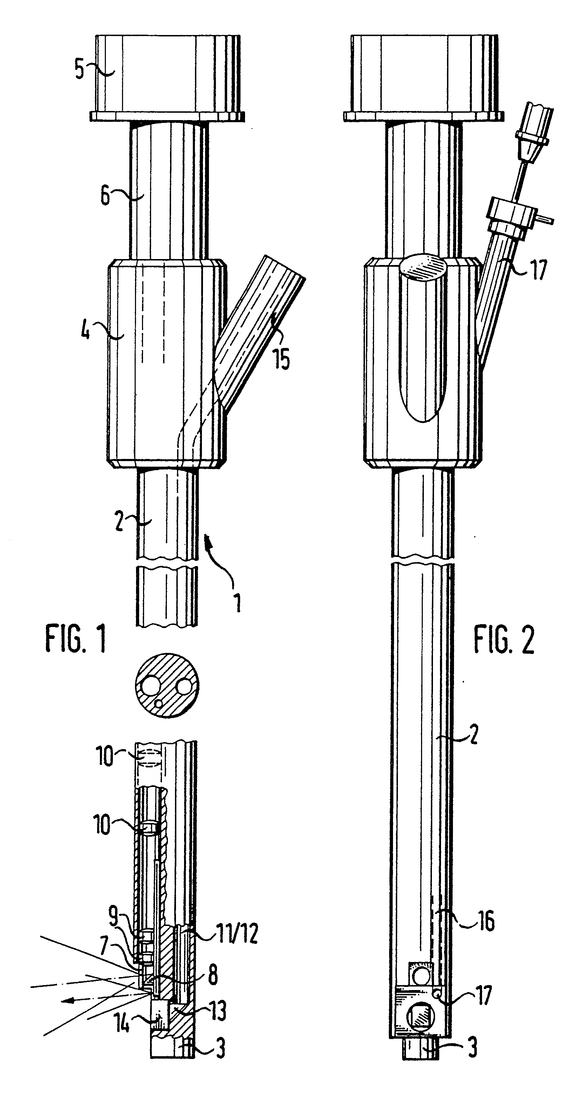

Das in den Figuren 1 und 2 dargestellte Technoskop 1 weist einen Schaft 2 auf, dessen distales Ende durch eine Verlängerung 3 mit rundem, ovalem oder eckigem Querschnitt verlängert ist. Der Schaft 2 ist an seinem proximalen Ende mit einem Gehäuseteil 4 versehen, das ein in Verlängerung des Schaftes 2 angeordnetes, durch einen Fokussierring 6 fokussierbares Okular 5 trägt. Das Okular 5 gehört zu einem in dem Schaft 2 eingebauten optischen System, welches aus einem den Strahlengang zur Längsachse des Technoskops 1 abwinkelnden, durch ein Ausblickfenster 7 gegen mechanische Beschädigung und dergleichen geschütztes Prisma 8 und einem Objektiv 9 besteht, sowie aus einer Anzahl von Relaislinsen 10. In dem Schaft 2 befindet sich weiter ein Kanal 11 beispielsweise für die Aufnahme eines Beleuchtungssystems aus einem in den Kanal 11 eingeführten Flüssigkeitslichtleiter oder Lichtleitfaserbündel 12. Distalseitig schließt an diesen Lichtleiter 12 ein Prisma 13 und an dieses ein Lichtaustrittsfenster 14 an, so daß der zu untersuchende Hohlraum ausgeleuchtet werden kann. Das Licht kann dabei von einem Lichtprojektor stammen, der je nach Anwendungszweck auch mit einem in dem Schaft 2 unlösbar festgelegten Lichtleiter 12 arbeiten kann, so daß dann der Anschluß über ein mit dem Lichtprojektor verbundenes flexibles Lichtleitfaserbündel 12 über einen als Lichtleitkabelanschluß stutzen ausgebildeten Anschlußteil 15 an dem Gehäuseteil 4 erfolgen kann. Schließlich ist in dem Schaft 2 ein in einer im Bereich des Lichtaustrittsfensters 7 befindlichen Austrittsöffnung 17 mündender Kanal 16 vorgesehen, durch dessen proximalseitigen Einführstutzen 17a ein Hilfsinstrument, eine Kanüle oder dergleichen in den zu untersuchenden Hohlraum eingeführt werden kann.

Auf die am distalen Ende des Schaftes 2 befindliche Verlängerung 3 kann ein Meßaufsatz 18 aufgesetzt und mittels der Klemmschraube 19 lösbar festgelegt werden. Anstelle der Klemmschraube 19 können auch andere geeignete Mittel zur lösbaren Festlegung verwendet werden.

Der erfindungsgemäße Meßaufsatz 18 besteht in einfachster Ausbildung aus einem pneumatisch arbeitenden Zylinder 20, dessen kegelstumpfförmiger Kolben 21 an zwei durch Federn 22 radial vorgespannten Schubelementen 23 angreift, die in einem mit einem Gehäuse 24 festgelegten Führungs- und Befestigungselement 25 längsverschiebbar festgelegt sind. Die Schubelemente 23 durchgreifen das Führungselement 25 durch Ausnehmungen 26, wobei an dem durchgreifenden Teil eines der Schubelemente 23 auf einer Aufnahme 27 eine Meßsonde 28 des nicht dargestellten Rißtiefenmeßrätes trägt, während das andere Schubelement 23 auf einer Aufnahme 29 ein Abstützelement 30 trägt. Der Anschluß der Meßsonde 28 an das Rißtiefenmeßgerät erfolgt über eine Verbindungsleitung 34, die gemeinsam mit der an den Zylinder 20 angeschlossenen Druckmittelleitung 35 durch den Kanal 12, durch einen separaten Kanal oder entlang des Schaftes 2 zu dem außerhalb des Hohlraumes befindlichen Rißtiefenmeßgerät einerseits, und zu der erforderlichen Druckpumpe andererseits geführt werden können. Zur besseren Führung und Abstützung des Technoskopes 1 kann auf das distale Ende des Schaftes 2 ein Abstützelement 32 aufgeschoben und mittels einer Fixierschraube 33 lösbar festgelegt werden.

Zur Handhabung des erfindungsgemäßen Endoskopes 1 ist es zunächst erforderlich, den Innendurchmesser einer visuell zu kontrollierenden Bohrung, eines Kanals, eines Rohres oder dergleichen zu ermitteln und das dem jeweiligen Durchmesser anzupassende Abstützelement 32 auf dem Schaft 2 des Technoskopes 1 so anzuordnen, daß sich dieses über seine gesamte Länge gleichmäßig an der inneren Oberfläche des zu untersuchenden Hohlraumes abstützt. Nach dem Einführen des distalseitigen Endes des Technoskopes 1 in den Hohlraum kann die innere Oberfläche durch kontinuierliches Verschieben in axialer Richtung und Verdrehen des Technoskopes um dessen Längsachse einer vollständigen visuellen Kontrolle unterzogen werden.

Zur Bestimmung der flächenmäßigen Ausdehnung von Oberflächenbeschädigungen können diese wie üblich mittels Magnetpulver oder einer flüssigen UV-Licht reflektierenden Substanz eingefärbt und mit einer UV-Lichtquelle bestrahlt werden, wodurch die Schadensstelle sehr deutlich und im vollem Umfang erkennbar wird. Die Zuführung derartiger Substanzen kann wahlweise durch den Kanal 16 direkt oder über eine durch diesen Kanal hindurchführbare Kanüle oder dergleichen in den zu untersuchenden Hohlraum eingeführt wird. Nach erfolgter Bestimmung der flächenmäßigen Ausdehnung der Oberflächenbeschädigung wird der Meßaufsatz 18 so im Bereich der Beschädigung angeordnet, daß die Meßsonde 28 nach erfolgtem Aufsetzen auf die innere Oberfläche im Bereich der Schadensstelle liegt. Die Bestimmung der Schadenstiefe erfolgt nach dem Gleichstrom-Potentialsondenverfahren, nach welchem das Rißtiefenmeßgerät arbeitet. Die Meßsonde 28 weist zwei Elektroden 31 auf, zwischen denen sich eine durch einen Oberflächenriß verursachte Störung der sich kissenförmig ausbreitenden Stromlinien einstellt, wobei als Maß für die Rißtiefe die daraus resultierende Potentialdifferenz herangezogen wird. Um eine konstante Meßgenauigkeit zu gewährleisten, das heißt um meßwertverfälschende Thermospannungen zwischen den beiden Meßelektroden 31 und der Oberfläche des Hohlraumes wirksam zu verhindern, stützt sich die Meßsonde 28 mittels des Abstützelementes 30 an der gegenüberliegenden Oberfläche ab, wodurch ein Eindringen der Elektroden 31 in die Oberfläche bewirkt wird.

Da bei dem hier beschriebenen Meßverfahren lediglich die Schadenstiefe der jeweils ausgewählten Stelle ermittelt werden kann, sind bei langen Rissen eine Vielzahl von Einzelmessungen erforderlich, die jeweils nach dem vorstehend geschilderten Verfahrensablauf durchgeführt werden.

**Ansprüche**

1. Technoskop zum Überprüfen technischer Oberflächen, insbesondere solcher von Hohlräumen in technischen Bauteilen, zwecks Feststellung eventueller Beschädigungen unter Bestimmung der Schadensausdehnung, mit einem Schaft (2) zur Aufnahme eines optischen Systems zur visuellen Kontrolle der Hohlräume, welches proximalseitig mit einem fokussierbaren Okular (5) versehen ist, eines Beleuchtungssystems zur Ausleuchtung der zu überprüfenden Oberfläche und eines Versorgungskanals (16) zur Einführung von Hilfsinstrumenten oder Hilfsmitteln, dadurch gekennzeichnet, daß das distale Ende des Schaftes (2) mit einem lösbar und drehstabil befestigbaren Meßaufsatz (18) zur Ermittlung der Tiefe einer Beschädigung versehen ist.

2. Technoskop nach Anspruch 1, dadurch gekennzeichnet, daß der Meßaufsatz (18) eine Meßsonde (28) und ein Abstützelement (30) aufweist, welche unter radialer Ausrichtung auf ineinander entgegengesetzten Richtungen durch pneumatische Betätigung verschiebbaren Schubelementen (23) befestigt ist.

3. Technoskop nach Anspruch 2, dadurch gekennzeichnet, daß die Verschiebung der Schubelemente (23) durch einen pneumatischen Kurzhubzylinder (20) erfolgt, der die Schubelemente (23) bei Druckbeaufschlagung gegen Federkraft auseinanderdrängt.

4. Technoskop nach einem der Ansprüche 1 bis 3, dadurch gekennzeichnet, daß das distale Ende des Schaftes (2) mit einem Abstützelement (32) zum Abstützen und Führen des Technoskopes in dem zu prüfenden Hohlraum versehen ist.

5. Technoskop nach einem der Ansprüche 1 bis 4, dadurch gekennzeichnet, daß zur Auswertung der Tiefenmessung ein nach dem Gleichstrom-Potentialsondenverfahren arbeitendes Rißtiefenmeßgerät Verwendung findet.

FIG. 1

FIG. 2

FIG. 3

2

33

32

31

28

27

34

3

29

30

25

23

21

35

24

20

26   23   22   18   23   26

19   22   25

FIG. 4